# EUROPEAN PATENT APPLICATION

(11) **EP 4 539 155 A1**
(43) Date of publication of application: **16.04.2025**
(21) Application number: 23833294.4
(22) Date of filing: 28.11.2023
(51) Int. Cl.: H01M 4/36, H01M 4/58

(54) **PREPARATION METHOD FOR SODIUM-ION BATTERY POSITIVE ELECTRODE MATERIAL, AND USE OF SODIUM-ION BATTERY POSITIVE ELECTRODE MATERIAL**

(30) Priority: 29.08.2023 CN 202311113969
(71) Applicant: Hubei RT Advanced Materials Co., Ltd., Huangshi, Hubei 435100 (CN)
(72) Inventor: SUN, Jie, Huangshi, Hubei 435100 (CN); HE, Jianhao, Huangshi, Hubei 435100 (CN); LI, Jinmao, Huangshi, Hubei 435100 (CN); GAO, Jiahui, Huangshi, Hubei 435100 (CN); MEI, Jing, Huangshi, Hubei 435100 (CN); HE, Zhonglin, Huangshi, Hubei 435100 (CN); CAI, Wang, Huangshi, Hubei 435100 (CN)
(74) Representative: Cleanthous, Marinos
(86) International application number: PCT/CN2023/134736
(87) International publication number: WO 2025/043913

(57) **Abstract**

Provided by an embodiment of the present disclosure is to provide a preparation method for a sodium ion battery cathode material, including the following steps: dispersing a sodium source compound, iron hydrogen phosphate hydrate and a carbon source compound in water according to a certain proportion, and stirring and mixing to obtain a dispersion solution; sand-grinding the dispersion solution in a sand mill for a certain period of time to obtain slurry; drying the sanded slurry to obtain a powdery precursor; and sintering and pulverizing the powdery precursor to obtain a sodium ion battery cathode material. The sodium ion battery cathode material prepared by the preparation method has high crystal phase purity, higher compaction density, and higher energy density. The sodium ion battery prepared based on the sodium ion battery cathode material has good battery cycle performance and stability. Meanwhile, the technical process of the preparation method is simple, and suitable for large-scale industrial production.

## Description

### TECHNICAL FIELD

The present disclosure relates to the technical field of sodium ion batteries, and in particular to a preparation method for a sodium ion battery cathode material, and application of the sodium ion battery cathode material.

### BACKGROUND

As the representative of second-generation batteries with the best comprehensive performance at present, the commercialization of lithium-ion batteries can be traced back to the 1990s. Lithium-ion batteries, after years of research, have developed into a mature battery technology route. However, limited by the crustal abundance of lithium, it is difficult for lithium-ion batteries to support the increasing energy storage market. Sodium ion battery has the similar operating principle to the lithium-ion battery, and sodium salt is rich in reserves and simple to mine, so the sodium ion battery has more advantages in large-scale application in the field of subsequent energy storage.

The sodium ion battery is mainly composed of a cathode, an anode, electrolyte, a diaphragm, and accessory components. Cathode and anode materials are the key to affect the performance of a sodium ion battery system, and the cathode material is particularly prominent. Sodium ion battery cathode materials are divided into three categories: transition metal oxide, Prussian white/blue, and polyanion type. The polyanionic sodium ion battery cathode material has the advantages of stable structure and small volume change during charging and discharging. In the polyanionic sodium ion battery cathode material, an iron-based sodium battery has the advantages of the lowest cost and non-toxicity, sodium iron pyrophosphate phosphate (Na₄Fe₃(PO₄)₂P₂O₇) is the most potential cathode material in the iron-based sodium battery, which has the advantages of low cost, environmental friendliness, high theoretical capacity (129 mAh/g), excellent cycle performance, and low volume expansion (about 4%).

At present, a high-temperature solid-state method using grinding-spraying-sintering process route is the most effective production method for preparing a second-generation battery cathode material. However, due to the influence of processing, when the sodium iron pyrophosphate phosphate is prepared using this process route, the raw materials used are mixed unevenly at the microscopic level, leading to the generation of impurities such as sodium iron phosphate and sodium iron pyrophosphate, which makes the crystal phase purity of the prepared cathode material lower. The above shortcomings seriously limit the subsequent application of the sodium iron pyrophosphate phosphate cathode material.

### SUMMARY

In view of above contents, the present disclosure is intended to at least solve one of the technical problems in the prior art. To this end, a preparation method for a sodium ion battery cathode material and application of the sodium ion battery cathode material are provided. The sodium ion battery cathode material prepared by the preparation method has high crystal phase purity, higher compaction density, and higher energy density. Meanwhile, the technical process of the preparation method is simple, and suitable for large-scale industrial production.

To this end, in a first aspect, a preparation method for a sodium ion battery cathode material is provided according to an embodiment of the present disclosure, including the following steps: dispersing a sodium source compound, iron hydrogen phosphate hydrate and a carbon source compound in water according to a certain proportion, and stirring and mixing to obtain a dispersion solution; sand-grinding the dispersion solution in a sand mill for a certain period of time to obtain slurry; drying the sanded slurry to obtain a powdery precursor; and sintering and pulverizing the powdery precursor to obtain a sodium ion battery cathode material.

Preferably, the sodium source compound and the iron hydrogen phosphate hydrate in the dispersion solution are added according to a molar ratio of n (Na): n (Fe) = 4: 3.

Preferably, the sodium source compound is one or more of sodium formate, sodium acetate, sodium citrate, sodium oxalate, sodium chloride, sodium nitrate, and sodium sulfate.

Preferably, an addition amount of the source carbon is 10wt% to 55wt% of an addition amount of the iron hydrogen phosphate hydrate.

Preferably, the carbon source compound is one or more of vaseline, stearic acid, sucrose, ascorbic acid, formaldehyde, acetaldehyde, n-butyraldehyde, lactic acid, citric acid, malic acid, oxalic acid, adipic acid, soluble starch, glucose, polyethylene glycol, maltose, cyclodextrin, carbon nanotubes, acetylene black, and graphene.

Preferably, a sand-grinding mode of the sand mill includes one of a disc type, a rod pin type, and a turbine type. A particle size of the sanded slurry is controlled at 0.1 µm< DN50<5 µm.

Preferably, a drying method may be one or more of blast drying, vacuum drying, freeze drying, and spray drying.

Preferably, sintering conditions comprise a sintering atmosphere, a sintering temperature, and sintering time, the sintering atmosphere is an atmosphere one, or a mixture of more, of nitrogen, argon, and helium, the sintering temperature is 450-700°C, a temperature rise rate is 1-3 °C/min, and the sintering time is 6-24 h.

Preferably, the pulverizing method may be one or two of mechanical pulverization, and jet pulverization.

In a second aspect, a sodium ion battery is provided according to an embodiment of the present disclosure, including the sodium ion battery cathode material provided by the first aspect.

According to a preparation method for a sodium ion battery cathode material provided by the embodiment of the present disclosure, the raw material, i.e., iron hydrogen phosphate hydrate (Fe₃(HPO₄)₄·H₂O) with a fixed iron-phosphorus ratio is used as a precursor in the preparation process, which eliminates the influence of the processing on the design of raw material ratio at the microscopic level, guarantees the uniformity of the raw materials, and makes the prepared sodium ion battery cathode material have high crystal phase purity, better crystallinity, better electrochemical performance, and higher compaction density and energy density. Meanwhile, the technical process of the preparation method is simple, and suitable for large-scale industrial production.

### BRIEF DESCRIPTION OF THE DRAWINGS

FIG. 1 is a flow diagram of a preparation method for a sodium ion battery cathode material according to an embodiment of the present disclosure.
FIG. 2 is an SEM (Scanning Electron Microscope) pattern of a sodium ion battery cathode material prepared according to Embodiment 1 of the present disclosure.
FIG. 3 is an XRD (X-Ray Diffraction) pattern of a sodium ion battery cathode material prepared according to Embodiment 1 of the present disclosure.
FIG. 4 is a curve graph of a first charge-discharge cycle of a button type half-cell assembled with a sodium ion battery cathode material prepared according to Embodiment 1 of the present disclosure at 0.1 C.
FIG. 5 is an XRD (X-Ray Diffraction) pattern of a sodium ion battery cathode material prepared according to Embodiment 2 of the present disclosure.
FIG. 6 is a curve graph of a first charge-discharge cycle of a button type half-cell assembled with a sodium ion battery cathode material prepared according to Embodiment 2 of the present disclosure at 0.1 C.
FIG. 7 is an XRD (X-Ray Diffraction) pattern of a sodium ion battery cathode material prepared according to Embodiment 3 of the present disclosure.
FIG. 8 is a curve graph of a first charge-discharge cycle of a button type half-cell assembled with a sodium ion battery cathode material prepared according to Embodiment 3 of the present disclosure at 0.1 C.

### DETAILED DESCRIPTION OF THE EMBODIMENTS

The embodiments of the present disclosure are described in detail below. Examples of the embodiments are shown in the accompanying drawings, and the same or similar numbers throughout this specification represent the same or similar elements or elements having the same or similar functions. The embodiments described below in conjunction with the drawings are illustrative, and are intended to illustrate the present disclosure, and cannot be construed as the limitations of the present disclosure.

The following disclosure provides many different embodiments or examples for implementing different structures of the present disclosure. To simplify the present disclosure, components and arrangements of particular examples are described below. Certainly, the components and arrangements are only examples and are not intended to limit the present disclosure. In addition, reference numerals and/or letters may be repeated in different examples according to the present disclosure. Such a repetition is for simplicity and clarity, and does not in itself indicate the relationship between the various embodiments and/or arrangements discussed. Furthermore, the present disclosure provides examples of various specific processes and materials, but those of ordinary skill in the art can realize the applicability of other processes and/or the use of other materials.

A preparation method for a sodium ion battery cathode material and application of the sodium ion battery cathode material are provided by the embodiments of the present disclosure. The preparation method is used for preparing the sodium ion battery cathode material with high crystal phase purity, higher compaction density, and high energy density. The sodium ion battery cathode material is a sodium iron pyrophosphate phosphate cathode material, a chemical formula of which is Na₄Fe₃(PO₄)₂P₂O₇. A sodium ion battery prepared based on the sodium ion battery cathode material has good battery cycle performance and stability.

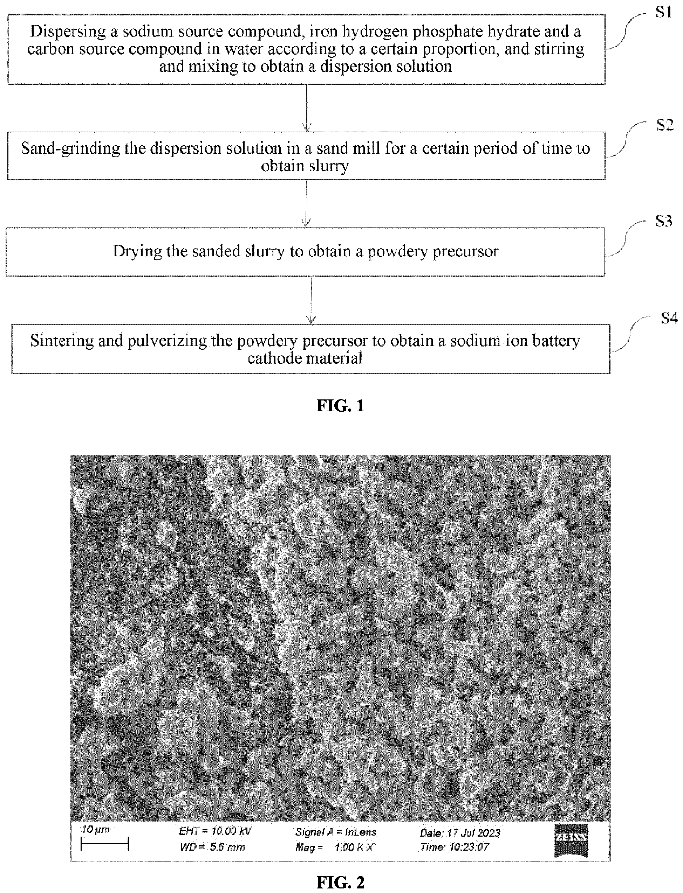

As shown in FIG. 1, a preparation method for a sodium ion battery cathode material is provided according to a first aspect embodiment of the present disclosure, including the following steps:
Step S1. A sodium source compound, iron hydrogen phosphate hydrate and a carbon source compound are dispersed in water according to a certain proportion, and then stirred and mixed to obtain a dispersion solution.

In the embodiment of the present disclosure, a chemical formula of the iron hydrogen phosphate hydrate is Fe₃(HPO₄)₄·H₂O, and the sodium source compound and the iron hydrogen phosphate hydrate in the dispersion solution are added according to a molar ratio of n (Na): n (Fe) = 4: 3.

The sodium source compound may be one or more of sodium formate, sodium acetate, sodium citrate, sodium oxalate, sodium chloride, sodium nitrate, and sodium sulfate.

An addition amount of the carbon source is 10wt%-55wt% of an addition amount of the iron hydrogen phosphate hydrate. The carbon source compound may be one or more of vaseline, stearic acid, sucrose, ascorbic acid, formaldehyde, acetaldehyde, n-butyraldehyde, lactic acid, citric acid, malic acid, oxalic acid, adipic acid, soluble starch, glucose, polyethylene glycol, maltose, cyclodextrin, carbon nanotubes, acetylene black, and graphene.

S2. The dispersion solution is subjected to sand-grinding in a sand mill for a certain period of time to obtain slurry.

A sand-grinding mode of the sand mill includes one of a disc type, a rod pin type, and turbine type. A particle size of the sanded slurry is controlled at 0.1 µm < DN50 <5 µm.

Step S3. The sanded slurry is dried to obtain a powdery precursor.

A drying method may be one or more of blast drying, vacuum drying, freeze drying, and spray drying.

S4. The powdery precursor is sintered and pulverized to obtain the sodium ion battery cathode material.

The sintering conditions include a sintering atmosphere, a sintering temperature, and sintering time. The sintering atmosphere is an atmosphere one, or a mixture of more, of nitrogen, argon, and helium, the sintering temperature is 450-700°C, a temperature rise rate is 1-3 °C/min, and the sintering time is 6-24 h.

According to a preparation method for a sodium ion battery cathode material provided by the embodiment of the present disclosure, the raw material, i.e., iron hydrogen phosphate hydrate (Fe₃(HPO₄)₄·H₂O) with a fixed iron-phosphorus ratio, is used as a precursor in the preparation process, which eliminates the influence of the processing on the design of raw material ratio at the microscopic level, guarantees the uniformity of the raw materials, and makes the prepared sodium ion battery cathode material have high crystal phase purity, better crystallinity, better electrochemical performance, and higher compaction density and energy density. The sodium ion battery prepared based on the sodium ion battery cathode material has good battery cycle performance and stability. Meanwhile, the technical process of the preparation method is simple, and suitable for large-scale industrial production.

In the following, the specific process and effect of the preparation method for the sodium ion battery cathode material of the present disclosure will be described in detail in conjunction with some specific embodiments, but are not limited to the scope of protection of the present disclosure.

### Embodiment 1

A preparation method for a sodium ion battery cathode material is provided by this embodiment, the sodium ion battery cathode material prepared in this embodiment is a Na₄Fe₃(PO₄)₂P₂O₇ cathode material, the method includes the following steps:

1 mol of iron hydrogen phosphate hydrate and 4 mol of sodium nitrate are weighed and dispersed in deionized water, glucose with the mass accounting for 20% of the addition mass of the iron hydrogen phosphate hydrate is weighed and added into the deionized water, then a dispersion solution is obtained after stirring and mixing. The dispersion solution is subjected to sand-grinding, and when a particle size of solid particles in the dispersion solution is DN50=0.2 µm, the grinding is stopped to obtain slurry. The grounded slurry is subjected to spray drying to obtain a powdery precursor. The obtained powdery precursor is placed in a nitrogen atmosphere, the temperature is increased to 500°C at 2 °C/min, and then is kept for 18 h. After the material is cooled and pulverized, the Na₄Fe₃(PO₄)₂P₂O₇ sodium ion battery cathode material 7 is obtained.

FIG. 2 is an SEM pattern of a Na₄Fe₃(PO₄)₂P₂O₇ cathode material prepared according to this embodiment.

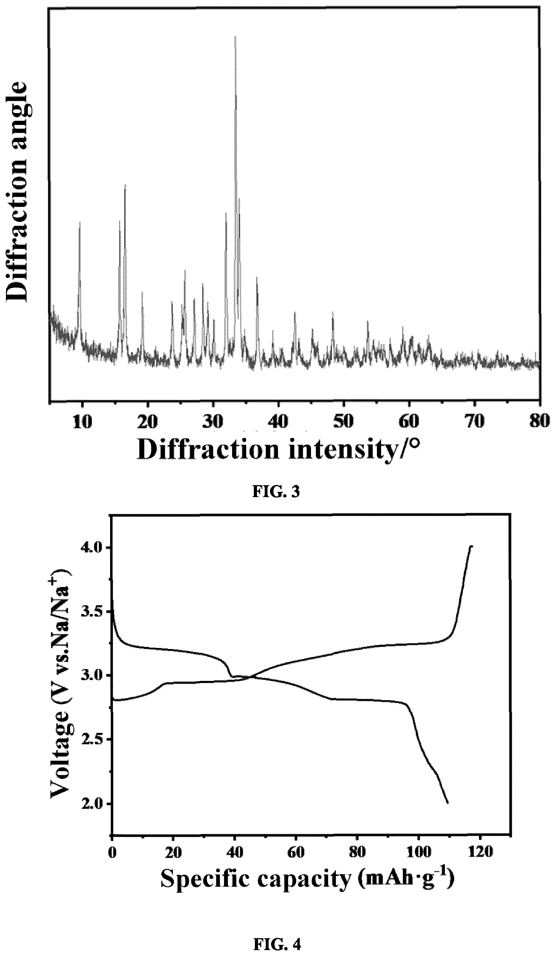

FIG. 3 is an XRD pattern of Na₄Fe₃(PO₄)₂P₂O₇ cathode material prepared according to this embodiment.

The Na₄Fe₃(PO₄)₂P₂O₇ cathode material prepared by this embodiment, acetylene black and PVDF (polyvinylidene fluoride) are mixed and homogenized by adding an appropriate amount of NMP (N-methylpyrrolidinone) according to a mass ratio of 70: 20: 10, black slurry is coated on an aluminum foil using a 150 µm four-sided preparation machine, and then the film is vacuum-dried in a vacuum drying oven at 110°C for 6 h. The dried electrode film is punched into a disc with the same radius by a punching machine, which is a positive electrode plate. With sodium metal as a negative electrode plate, a glass fiber membrane as a diaphragm and NaPF₆/EC+DEC+DMC as the electrolyte (EC: DEC: DMC = 1: 1: 1 by volume), a button-type half cell is assembled in a glove box with water oxygen content less than 0.01 ppm. A test result is shown in FIG. 4, when a current density is 0.1 C, and a voltage ranges from 2.0 V to 4.0 V, the discharge capacity reaches 109.7 mAh/g.

### Embodiment 2

A preparation method for a sodium ion battery cathode material is provided by this embodiment, the sodium ion battery cathode material prepared in this embodiment is a Na₄Fe₃(PO₄)₂P₂O₇ cathode material, the method includes the following steps:
1 mol of iron hydrogen phosphate hydrate and 4 mol of sodium chloride are weighed and dispersed in deionized water, glucose with the mass accounting for 30% of the addition mass of the iron hydrogen phosphate hydrate is weighed and added into the deionized water, then a dispersion solution is obtained after stirring and mixing. The dispersion solution is subjected to sand-grinding, and when a particle size of solid particles in the dispersion solution is DN50=3.0 µm, the grinding is stopped to obtain slurry. The grounded slurry is subjected to spray drying to obtain a powdery precursor. The obtained powdery precursor is placed in a nitrogen atmosphere, the temperature is increased to 550°C at 2 °C/min, and then is kept for 16 h. After the material is cooled and pulverized, the Na₄Fe₃(PO₄)₂P₂O₇ sodium ion battery cathode material is obtained.

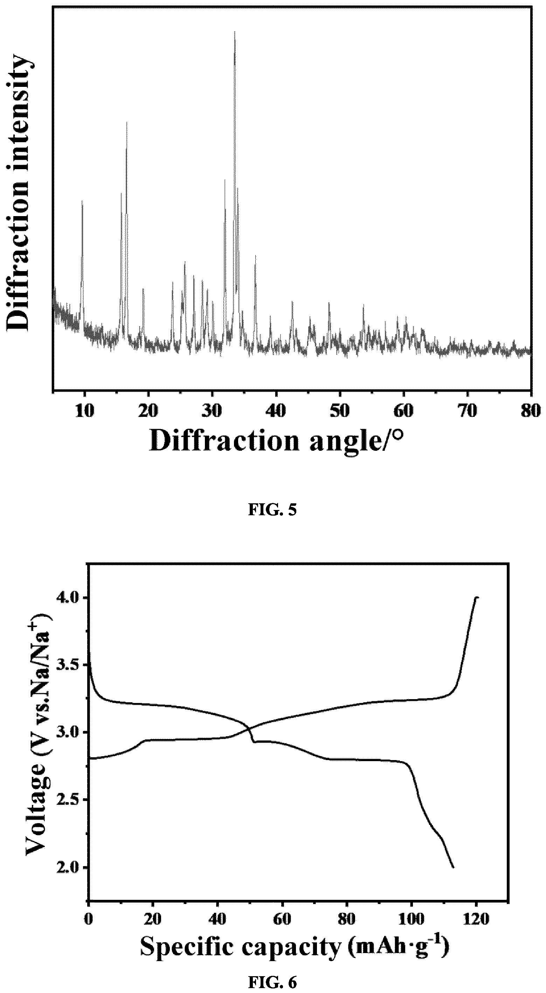

FIG. 5 is an XRD pattern of a Na₄Fe₃(PO₄)₂P₂O₇ cathode material prepared according to this embodiment.

The Na₄Fe₃(PO₄)₂P₂O₇ cathode material prepared by this embodiment, acetylene black and PVDF are mixed and homogenized by adding an appropriate amount of NMP according to a mass ratio of 70: 20: 10, black slurry is coated on an aluminum foil using a 150 µm four-sided preparation machine, and then the film is vacuum-dried in a vacuum drying oven at 110°C for 6 h. The dried electrode film is punched into a disc with the same radius by a punching machine, which is a positive electrode plate. With sodium metal as a negative electrode plate, a glass fiber membrane as a diaphragm and NaPF₆/EC+DEC+DMC as the electrolyte (EC: DEC: DMC = 1: 1: 1 by volume), a button-type half cell is assembled in a glove box with water oxygen content less than 0.01 ppm. A test result is shown in FIG. 6, when a current density is 0.1 C, and a voltage ranges from 2.0 V to 4.0 V, the discharge capacity reaches 112.9 mAh/g.

### Embodiment 3

A preparation method for a sodium ion battery cathode material is provided by this embodiment, the sodium ion battery cathode material prepared in this embodiment is a Na₄Fe₃(PO₄)₂P₂O₇ cathode material, the method includes the following steps:
1 mol of iron hydrogen phosphate hydrate and 4 mol of sodium acetate are weighed and dispersed in deionized water, glucose with the mass accounting for 25% of the addition mass of the iron hydrogen phosphate hydrate is weighed and added into the deionized water, then a dispersion solution is obtained after stirring and mixing. The dispersion solution is subjected to sand-grinding, and when a particle size of solid particles in the dispersion solution is DN50=4.6 µm, the grinding is stopped to obtain slurry. The grounded slurry is subjected to spray drying to obtain a powdery precursor. The obtained powdery precursor is placed in a nitrogen atmosphere, the temperature is increased to 600°C at 5 °C/min, and then is kept for 12 h. After the material is cooled and pulverized, the Na₄Fe₃(PO₄)₂P₂O₇ sodium ion battery cathode material is obtained.

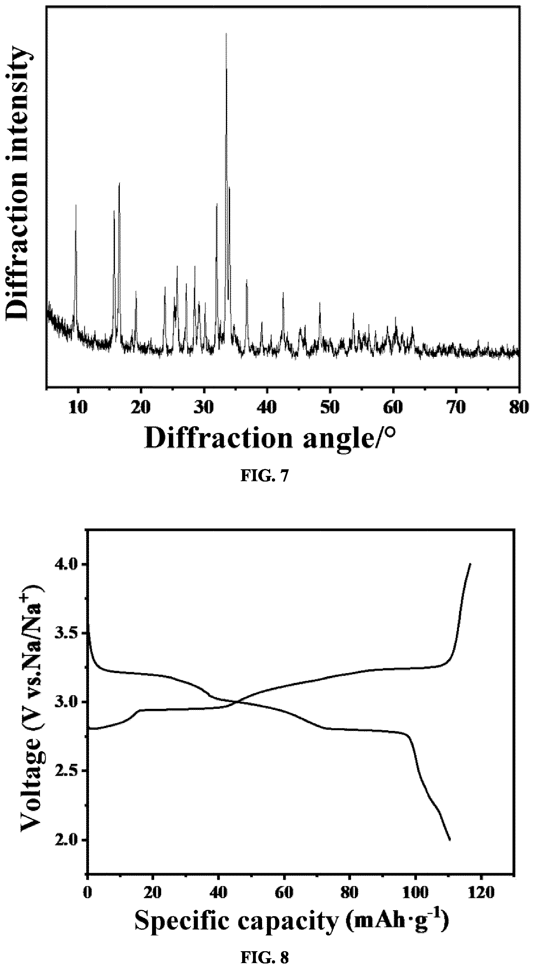

FIG. 7 is an XRD pattern of Na₄Fe₃(PO₄)₂P₂O₇ cathode material prepared according to this embodiment.

The Na₄Fe₃(PO₄)₂P₂O₇ cathode material prepared by this embodiment, acetylene black and PVDF are mixed and homogenized by adding an appropriate amount of NMP according to a mass ratio of 70: 20: 10, black slurry is coated on an aluminum foil using a 150 µm four-sided preparation machine, and then the film is vacuum-dried in a vacuum drying oven at 110°C for 6 h. The dried electrode film is punched into a disc with the same radius by a punching machine, which is a positive electrode plate. With sodium metal as a negative electrode plate, a glass fiber membrane as a diaphragm and NaPF₆/EC+DEC+DMC as the electrolyte (EC: DEC: DMC = 1: 1: 1 by volume), a button-type half cell is assembled in a glove box with water oxygen content less than 0.01 ppm. A test result is shown in FIG. 8, when a current density is 0.1 C, and a voltage ranges from 2.0 V to 4.0 V, the discharge capacity reaches 110.5 mAh/g.

A sodium ion battery is provided according to a second aspect embodiment of the present disclosure, the sodium ion battery includes the sodium ion battery cathode material prepared by the preparation method provided by the first aspect embodiment.

In conclusion, according to a preparation method for a sodium ion battery cathode material provided by the embodiment of the present disclosure, the raw material, i.e., iron hydrogen phosphate hydrate (Fe₃(HPO₄)₄·H₂O) with a fixed iron-phosphorus ratio, is used as a precursor in the preparation process, which eliminates the influence of the processing on the design of raw material ratio at the microscopic level, guarantees the uniformity of the raw materials, and makes the prepared sodium ion battery cathode material have high crystal phase purity, better crystallinity, better electrochemical performance, and higher compaction density and energy density. The sodium ion battery prepared based on the sodium ion battery cathode material has good battery cycle performance and stability. Meanwhile, the technical process of the preparation method is simple, and suitable for large-scale industrial production.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of the present disclosure. In this specification, the schematic representations of the above terms are not necessarily aimed at the same embodiment or example. Moreover, specific features, structures, materials or characteristics described may be combined in any one or more embodiments or examples in a suitable manner. In addition, those skilled in the art can bind and combine different embodiments or examples and features of different embodiments or examples described in this specification without contradicting each other.

Although the embodiments of the present disclosure have been shown and described, those skilled in the art can understand that many changes, modifications, substitutions and variations can be made to these embodiments without departing from the principles and purposes of the present disclosure, and the scope of the present disclosure is defined by the claims and their equivalents.

## Claims

1. A preparation method for a sodium ion battery cathode material, comprising the following steps:
dispersing a sodium source compound, iron hydrogen phosphate hydrate and a carbon source compound in water according to a certain proportion, and stirring and mixing to obtain a dispersion solution;
sand-grinding the dispersion solution in a sand mill for a certain period of time to obtain slurry;
drying the sanded slurry to obtain a powdery precursor; and
sintering and pulverizing the powdery precursor to obtain a sodium ion battery cathode material.

2. The preparation method for preparing a sodium ion battery cathode material according to claim 1, wherein the sodium source compound and the iron hydrogen phosphate hydrate in the dispersion solution are added according to a molar ratio of n (Na): n (Fe) = 4: 3.

3. The preparation method for preparing a sodium ion battery cathode material according to claim 1, wherein the sodium source compound is one or more of sodium formate, sodium acetate, sodium citrate, sodium oxalate, sodium chloride, sodium nitrate, and sodium sulfate.

4. The preparation method for preparing a sodium ion battery cathode material according to claim 1, wherein an addition amount of the carbon source is 10wt% to 55wt% of an addition amount of the iron hydrogen phosphate hydrate.

5. The preparation method for preparing a sodium ion battery cathode material according to claim 1, wherein the carbon source compound is one or more of vaseline, stearic acid, sucrose, , ascorbic acid, formaldehyde, acetaldehyde, n-butyraldehyde, lactic acid, citric acid, malic acid, oxalic acid, adipic acid, soluble starch, glucose, polyethylene glycol, maltose, cyclodextrin, carbon nanotubes, acetylene black, and graphene.

6. The preparation method for preparing a sodium ion battery cathode material according to claim 1, wherein a sand-grinding mode of the sand mill comprises one of a disc type, a rod pin type, and a turbine type; a particle size of the sanded slurry is controlled at 0.1 µm < DN50 <5 µm.

7. The preparation method for preparing a sodium ion battery cathode material according to claim 1, wherein a drying method is one or more of blast drying, vacuum drying, freeze drying, and spray drying.

8. The preparation method for preparing a sodium ion battery cathode material according to claim 1, wherein sintering conditions comprise a sintering atmosphere, a sintering temperature, and sintering time, the sintering atmosphere is an atmosphere one, or a mixture of more, of nitrogen, argon, and helium, the sintering temperature is 450-700°C, a temperature rise rate is 1-3 °C/min, and the sintering time is 6-24 h.

9. The preparation method for preparing a sodium ion battery cathode material according to claim 1, wherein the pulverizing method is one or two of mechanical pulverization, and jet pulverization.

10. A sodium ion battery, wherein the sodium ion battery includes the sodium ion battery cathode material prepared by the preparation method according to any one of claims 1 to 9.
